# EUROPEAN PATENT SPECIFICATION

(11) **EP 3 555 150 B1**
(45) Date of publication and mention of the grant of the patent: **25.10.2023**
(21) Application number: 17816714.4
(22) Date of filing: 12.12.2017
(51) Int. Cl.: C08F 110/02, C08F 4/651, C08F 4/654, C08F 4/649

(54) **CATALYST COMPONENTS FOR THE POLYMERIZATION OF OLEFINS AND CATALYSTS THEREFROM OBTAINED**
KATALYSATORKOMPONENTEN ZUR OLEFINPOLYMERISIERUNG UND DARAUS GEWONNENEN KATALYSATOREN
COMPOSANTS DE CATALYSEUR POUR LA POLYMÉRISATION D'OLÉFINES ET CATALYSEURS AINSI OBTENUS

(30) Priority: 19.12.2016 EP 16204972
(43) Date of publication of application: 23.10.2019
(73) Proprietor: Basell Poliolefine Italia S.r.l., 20121 Milano (IT)
(72) Inventor: COLLINA, Gianni, 44122 Ferrara (IT); DI DIEGO, Maria, 44122 Ferrara (IT); GADDI, Benedetta, 44122 Ferrara (IT); GESSI, Piero, 44122 Ferrara (IT); MARTURANO, Lorella, 44122 Ferrara (IT); MORINI, Giampiero, 44122 Ferrara (IT)
(74) Representative: LyondellBasell
(86) International application number: PCT/EP2017/082336
(87) International publication number: WO 2018/114453

(56) References cited:
- WO-A1-2010/020575
- US-A- 5 122 490
- US-A1- 2007 072 764
- US-A1- 2007 179 047
- DATABASE WPI Week 201657 Thomson Scientific, London, GB; AN 2016-244148 XP002779144, -& CN 105 482 003 A (SINOPEC BEIJING RES INST CHEM IND) 13 April 2016 (2016-04-13)

## Description

### FIELD OF THE INVENTION

The present disclosure relates to catalyst components for the polymerization of olefins CH₂=CHR, wherein R is hydrogen or hydrocarbon radical having 1-12 carbon atoms. In particular, the disclosure relates to catalyst components suitable for the preparation of homopolymers and copolymers of ethylene and to the catalysts obtained therefrom.

In particular, the present disclosure relates to solid catalyst components, comprising titanium magnesium and halogen, and a specific combination and content of electron donor compounds.

### BACKGROUND OF THE INVENTION

High-yield catalyst components for the polymerization of olefins and in particular for ethylene are known in the art. They are generally obtained by supporting, on a magnesium dihalide, a titanium compound normally chosen from titanium halides alkoxide and haloalcoholates. Said catalyst components are used together with an aluminum alkyl compound in the polymerization of ethylene. This kind of catalyst components, and the catalysts obtained therefrom, are largely used in the plants for the (co)polymerization of ethylene both operating in liquid phase (slurry or bulk) and in gas-phase. However, the use of the catalyst components as such is not completely satisfactory. Indeed, due to the high reactivity of the ethylene, the kinetic of the polymerization reaction is very high. As a consequence, the catalyst is subject to a very strong tension during the initial stage of polymerization which can cause the uncontrolled breakage of the catalyst itself. Particularly, when the polymerization process is carried out in gas-phase, this behavior causes the formation of very small particles of polymer, which, in turn, lead to low bulk density of the polymer and to operating process difficulties.

These drawbacks are more evident when polymer with a bimodal molecular weight distribution have to be produced. In fact, one of the most common methods for preparing bimodal MWD polymers is the multi-step process based on the production of different molecular weight polymer fractions in each step. The control of the molecular weight obtained in each step can be carried out according to different methods, for example by varying the polymerization conditions such as using different concentrations of molecular weight regulator. Regulation with hydrogen is the preferred method either working in suspension or in gas phase.

For a catalyst to perform in such a process, a critical step is that in which the low molecular weight fraction is prepared. This step in fact, is carried out under a relatively high concentration of hydrogen which exacerbates the strong tensions to which the catalyst is subjected while hosting the growing polymer.

It is therefore important for the catalyst to display high morphological stability to avoid fragmentation in very small particles that reduce the polymer bulk density and create relatively high amount of fines making difficult the operation of the plant particularly in the gas-phase polymerization.

While it is disclosed that the presence of an internal or external donor can modify the breath of molecular weight distribution, much less is disclosed in terms of impact of internal donors in catalyst morphology. In WO2010/020575 it has been described that a catalyst containing a monofunctional internal donor, such as ethyl acetate (AcOEt), can improve its hydrogen response and capability to produce high bulk density products if a very low amount of an additional monofunctional donor is used. The ratio among the two monofunctional donor can be from 20 to 800 preferably from 40 to 650. In particular, the use of amounts of ethyl benzoate (EB) such as to have an AcOEt/EB molar ratio in the catalyst of about 50 produced a polyethylene with substantially the same molecular weight as that produced with the unmodified catalyst endowed with a higher bulk density (0.342 vs 0.199). Unfortunately however, the catalyst activity dropped to a level (1.1 kg of polymer per g of catalysts) which makes its use in industrial plants unsustainable.

It is therefore felt the need of a catalyst showing at the same time increased morphological stability with an at least acceptable activity and capability to keep constant polymer properties.

It has therefore surprisingly been found that the above need can be satisfied when a catalyst containing a specific monofunctional donor is added with a specific amount of another monofunctional donor belonging to a specific class.

### SUMMARY OF THE INVENTION

Accordingly, it is an object of the present disclosure a solid catalyst component comprising Ti, Mg, chlorine and an internal donor selected from C₁-C₁₀ alkyl esters of C₂-C₁₀ aliphatic monocarboxylic acids (EAA) and another internal donor selected from cyclic ethers (CE) in an amount such that the EAA/CE molar ratio ranges from 0.2 to less than 20.

### DETAILED DESCRIPTION OF THE INVENTION

Preferably, the EAA/CE molar ratio ranges from 0.2 to 16, more preferably from 0.5 to 10, in particular from 0.8 to 7.5 and especially from 0.8 to 5.

The internal electron donor compound (EAA) is preferably selected from C₂-C₅ alkyl esters of C₂-C₆ aliphatic monocarboxylic acids. Among them, particularly preferred is ethyl acetate.

The term (CE) also includes ethers having more than one C-O-C bonds. The (CE) internal donor is preferably selected from cyclic ethers or diethers having 3-5 carbon atoms and, among them, tetrahydrofuran, tetrahydropyrane and dioxane are the most preferred with tetrahydrofuran being especially preferred.

The (EAA+CE)/Ti molar ratio is preferably higher than 1.5, and more preferably ranges from 2.0 to 10 and especially from 2.5 to 8.

In a particular embodiment, when the EAA/CE ratio is in the range 0.8 to 5, and the catalyst component does not contain any amount of prepolymer, the (EAA+CE)/Ti molar ratio ranges from higher than 4 to 8; for prepolymerized catalyst components in which the EAA/CE ratio is in the range 0.8 to 5, the (EAA+CE)/Ti molar ratio ranges from 2.5 to 5.

The content of (EAA) typically ranges from 1 to 30%wt with respect to the total weight of the solid catalyst component, more preferably from 2 to 20%wt. The content of (CE) typically ranges from 1 to 20%wt with respect to the total weight of the solid catalyst component, more preferably from 2 to 10%wt.

The combined content of (EAA)+(CE) preferably ranges from 2 to 50%, more preferably from 8 to 30% based on the total weight of solid catalyst component. In a preferred embodiment, the combined content ranges from 18% to 15%wt.

The Mg/Ti molar ratio preferably ranges from 5 to 50, more preferably from 10 to 40.

As disclosed above the catalyst component comprises, in addition to the electron donor compounds, also Ti, Mg and chlorine. The Ti atoms preferably derive from a Ti compound containing at least a Ti-halogen bond and the Mg atoms preferably derive from a magnesium dichloride. Preferred titanium compounds are the tetrahalides or the compounds of formula TiXₙ(OR¹)₄₋ₙ, where 0<n<3, X is halogen, preferably chlorine, and R¹ is C₁-C₁₀ hydrocarbon group. Titanium tetrachloride is the preferred titanium compound.

The catalyst component of the present disclosure can be prepared according to different methods.

One preferred method comprises the following steps: (a) contacting a MgX₂(R²OH)ₘ adduct in which R² groups are C₁-C₂₀ hydrocarbon groups and X is halogen, with a liquid medium comprising a Ti compound having at least a Ti-Cl bond, in an amount such that the Ti/Mg molar ratio is greater than 3, thereby forming a solid intermediate;

(b) contacting the internal donor compounds (EAA) and (CE) as previously defined with the solid intermediate product coming from (a) followed by washing the so obtained product.

Preferred starting MgX₂(R²OH)ₘ adducts are those in which R² groups are C₁-C₁₀ alkyl groups, X is chlorine and m is from 0.5 to 4 and more preferably from 0.5 to 2. Adducts of this type can generally be obtained by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034.

Particularly interesting are the MgCl₂(EtOH)ₘ adducts in which m is from 0.15 to 1.5 and particle size ranging from 10 to 100 µm obtained by subjecting the adducts with a higher alcohol content to a thermal dealcoholation process carried out in nitrogen flow at temperatures comprised between 50 and 150°C until the alcohol content is reduced to the above value. A process of this type is described in EP 395083.

The dealcoholation can also be carried out chemically by contacting the adduct with compounds capable to react with the alcohol groups.

Generally these dealcoholated adducts are also characterized by a porosity (measured by mercury method) due to pores with radius up to 1µm ranging from 0.15 to 2.5 cm³/g preferably from 0.25 to 1.5 cm³/g.

The reaction with the Ti compound can be carried out by suspending the adduct in TiCl₄ (generally cold); subsequently the mixture is heated up to temperatures ranging from 80-130°C and kept at this temperature for 0.5-2 hours. The treatment with the titanium compound can be carried out one or more times. Preferably, it is carried out two times. At the end of the process the intermediate solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated hydrocarbons.

As mentioned above, the intermediate solid is, in step (b) brought into contact with the internal donor compounds under conditions such as to fix on the solid an amount of donors such that the EAA/CE molar ratio ranging from 0.2 to less than 20 is fulfilled.

Although not strictly required the contact is typically carried out in a liquid medium such as a liquid hydrocarbon. The temperature at which the contact takes place can vary depending on the nature of the reagents. Generally, it is comprised in the range from -10° to 150°C and preferably from 0° to 120°C. It is clear that temperatures causing the decomposition or degradation of any specific reagents should be avoided even if they fall within the generally suitable range. Also the time of the treatment can vary in dependence of other conditions such as nature of the reagents, temperature, concentration etc. As a general indication, this contact step can last from 10 minutes to 10 hours more frequently from 0.5 to 5 hours. If desired, in order to further increase the final donor content, this step can be repeated one or more times.

At the end of this step the solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated or oxygenated hydrocarbons.

According to a specific embodiment, it is particularly preferred that after step (b) a further step (c) is carried out subjecting the solid catalyst component coming from (b) to a thermal treatment carried out at a temperature from 70 to 150°C.

In the step (c) of the method, the solid product recovered from step (b) is subject to a thermal treatment carried out at temperatures ranging from 70 to 150°C, preferably from 80°C to 130°C, and more preferably from 85 to 100°C.

The thermal treatment can be carried out in several ways. According to one of them the solid coming from step (b) is suspended in an inert diluent like a hydrocarbon and then subject to the heating while maintaining the system under stirring.

According to an alternative technique, the solid can be heated in a dry state by inserting it in a device having jacketed heated walls. While stirring can be provided by means of mechanical stirrers placed within said device it is preferred to cause stirring to take place by using rotating devices.

According to a still different embodiment the solid coming from (b) can be heated by subjecting it to a flow of hot inert gas such as nitrogen, preferably maintaining the solid under fluidization conditions.

The heating time is not fixed but may vary depending also on the other conditions such as the maximum temperature reached. It generally ranges from 0.1 to 10 hours, more specifically from 0.5 to 6 hours. Usually, higher temperatures allow the heating time to be shorter while, on the opposite, lower temperatures may require longer reaction times.

In the process as described each of the step (b)-(c) can be carried out immediately after the previous step, without the need of isolating the solid product coming from that previous step. However, if desired the solid product coming from one step can be isolated and washed before being subject to the subsequent step.

According to a specific embodiment, a preferred modification of the process comprises subjecting the solid coming from step (a) to a prepolymerization step (a2) before carrying out step (b).

The pre-polymerization can be carried out with any of the olefins CH₂=CHR, where R is H or a C₁-C₁₀ hydrocarbon group. In particular, it is especially preferred to pre-polymerize ethylene or propylene or mixtures thereof with one or more α-olefins, said mixtures containing up to 20% in moles of α-olefin, forming amounts of polymer from about 0.1 g up to about 1000 g per gram of solid intermediate, preferably from about 0.5 to about 500 g per gram of solid intermediate, more preferably from 0.5 to 50 g per gram of solid intermediate and especially from 0.5 to 5 g per gram of solid intermediate.

In a particular embodiment, the prepolymerization generates a solid catalyst component containing an olefin polymer in an amount ranging from 10 to 85% of the total weight of the solid catalyst component.

The pre-polymerization step can be carried out at temperatures from 0 to 80°C, preferably from 5 to 70°C, in the liquid or gas phase. The pre-polymerization of the intermediate with ethylene or propylene in order to produce an amount of polymer ranging from 0.5 to 20 g per gram of intermediate is particularly preferred. The pre-polymerization is carried out with the use of a suitable cocatalyst such as organoaluminum compounds. When the solid intermediate is prepolymerized with propylene it is especially preferred that the prepolymerization is carried out in the presence of one or more external donors preferably selected from the group consisting of silicon compounds of formula Rₐ⁴R_{b}⁵Si(OR⁶)_{c,} where a and b are integer from 0 to 2, c is an integer from 1 to 3 and the sum (a+b+c) is 4; R⁴, R⁵, and R⁶, are alkyl, cycloalkyl or aryl radicals with 1-18 carbon atoms optionally containing heteroatoms. Particularly preferred are the silicon compounds in which a is 1, b is 1, c is 2, at least one of R⁴ and R⁵ is selected from branched alkyl, cycloalkyl or aryl groups with 3-10 carbon atoms optionally containing heteroatoms and R⁶ is a C₁-C₁₀ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane.

Al the above mentioned processes are suitable for the preparation of particles of solid catalyst components having substantially spherical morphology and average diameter comprised between 5 and 150 µm, preferably from 10 to 100 µm. As particles having substantially spherical morphology, those are meant wherein the ratio between the greater axis and the smaller axis is equal to, or lower than 1.5, and preferably lower than 1.3.

Generally, the solid catalyst components obtained according to the above method show a surface area (by B.E.T. method) generally between 10 and 200 m²/g and preferably between 20 and 80 m²/g, and a total porosity (by B.E.T. method) higher than 0.15 cm³/g preferably between 0.2 and 0.6 cm³/g. The porosity (Hg method) due to pores with radius up to 10.000 Å generally ranges from 0.25 to 1 cm³/g, preferably from 0.35 to 0.8 cm³/g.

The catalyst components of the disclosure whatever is the method for their preparation, form catalysts, for the polymerization of alpha-olefins CH₂=CHR wherein R is hydrogen or a hydrocarbon radical having 1-12 carbon atoms by reaction with Al-alkyl compounds. In particular Al-trialkyl compounds, for example Al-trimethyl, Al-triethyl, Al-tri-n-butyl, Al-triisobutyl are preferred. The Al/Ti ratio is higher than 1 and is generally comprised between 5 and 800.

Also alkylaluminum halides and in particular alkylaluminum chlorides such as diethylaluminum chloride (DEAC), diisobutylaluminum chloride, Al-sesquichloride and dimethylaluminum chloride (DMAC) can be used. It is also possible to use, and in certain cases preferred, mixtures of trialkylaluminum compounds with alkylaluminum halides. Among them mixtures TEAL/DEAC and TIBA/DEAC are particularly preferred.

Optionally, an external electron donor (ED) can be used during polymerization. The external electron donor compound can be equal to, or different from, the internal donors used in the solid catalyst component. Preferably, it is selected from the group consisting of ethers, esters, amines, ketones, nitriles, silanes and mixtures of the above. In particular, it can advantageously be selected from the C₂-C₂₀ aliphatic ethers and especially from cyclic ethers preferably having 3-5 carbon atoms cyclic ethers such as tetrahydrofuran and dioxane.

In addition to the aluminium alkyl cocatalyst (B) and the possible use of an external electron donor (ED) as a component (C), it is possible to use a halogenated compound (D) as activity enhancer. Said compound is preferably a mono or dihalogenated hydrocarbon. In one preferred embodiment, it is chosen among monohalogenated hydrocarbons in which the halogen is linked to a secondary carbon atom. The halogen is preferably chosen among chloride and bromide.

Exemplary compounds (D) are propylchloride, i-propylchloride, butylchloride, s-butylchloride, t-butylchloride 2-chlorobutane, cyclopentylchloride, cyclohexylchloride, 1,2-dichloroethane, 1,6-dichlorohexane, propylbromide, i-propylbromide, butylbromide, s-butylbromide, t-butylbromide, i-butylbromide i-pentylbromide, and t-pentylbromide. Among them, particularly preferred are i-propylchloride, 2-chlorobutane, cyclopentylchloride, cyclohexylchloride, 1,4-dichlorobutane and 2-bromopropane.

According to another embodiment the compounds can be chosen from among halogenated alcohols, esters or ethers such as 2,2,2,-trichloroethanol, ethyl trichloroacetate, butyl perchlorocrotonate, 2-chloro propionate and 2-chloro-tetrahydrofurane.

The activity enhancer can be used in amounts such as to have the (B)/(D) molar ratio of higher than 3 and preferably in the range 5-50 and more preferably in the range 10-40.

The above mentioned components (A)-(D) can be fed separately into the reactor where, under the polymerization conditions can exploit their activity. It constitutes however a particular advantageous embodiment the pre-contact of the above components, optionally in the presence of small amounts of olefins, for a period of time ranging from 1 minute to 10 hours, preferably in the range from 2 to 7 hours. The pre-contact can be carried out in a liquid diluent at a temperature ranging from 0 to 90°C preferably in the range of 20 to 70°C.

One or more alkyl aluminum compound or mixtures thereof can be used in the pre-contact. If more than one alkylaluminum compound is used in the pre-contact, they can be used altogether or added sequentially to the pre-contact tank. Even if the pre-contact is carried out it is not necessary to add at this stage the whole amount of aluminum alkyl compounds. A portion thereof can be added in the pre-contact while the remaining aliquot can be fed to the polymerization reactor. Moreover, when more than one aluminum alkyl compound is used, it is also possible using one or more in the precontact process and the other(s) fed to the reactor.

In one of the preferred embodiments, a precontact is carried out by first contacting the catalyst component with an aluminum trialkyl such as tri-n-hexyl aluminum (THA), then another aluminum alkyl compound, preferably, diethylaluminum chloride is added to the mixture, and finally as a third component another trialkylaluminum, preferably, triethylaluminum is added to the pre-contact mixture. According to a variant of this method, the last aluminum trialkyl is added to the polymerization reactor.

The total amount of aluminum alkyl compounds used can vary within broad ranges, but it preferably ranges from 2 to 10 mols per mole of internal donor in the solid catalyst component.

The catalyst systems so obtained can be used in any type of polymerization process but it is particularly suitable for gas-phase polymerization. They can work in any type of gas phase reactors that can be either fluidized or mechanically stirred bed. They can be used also in gas-phase reactors working under fast fluidization conditions. Examples of gas-phase processes wherein it is possible to use the catalysts of the present disclosure are described in WO92/21706, USP 5,733,987 and WO 93/03078.

In the gas-phase process the polymerization temperature ranges from 50 and 120°C, preferably between 60 and 100°C, while the operating pressure is between 10 to 40 bar, preferably from 15 to 35 bars. The fluidizing inert gas can be chosen among any inert gas known for this purpose. Nitrogen and propane are particularly preferred.

A particularly preferred gas-phase process for the polymerization of olefins, comprises the following steps in any mutual order:
a) polymerizing ethylene, optionally together with one or more comonomers, in a gas-phase reactor in the presence of the catalyst system of the present disclosure;
b) polymerizing ethylene optionally with one or more comonomers in another gas-phase reactor in the presence of an amount of hydrogen less than step a) and of the catalysts system as defined in step (a);
where in at least one of said gas-phase reactors the growing polymer particles flow upward through a first polymerization zone (riser) under fast fluidization or transport conditions, leave said riser and enter a second polymerization zone (downcomer) through which they flow downward under the action of gravity, leave said downcomer and are reintroduced into the riser, thus establishing a circulation of polymer between said two polymerization zones. In the first polymerization zone (riser), fast fluidization conditions are established by feeding a gas mixture comprising one or more olefins (ethylene and comonomers) at a velocity higher than the transport velocity of the polymer particles. The velocity of said gas mixture is preferably comprised between 0.5 and 15 m/s, more preferably between 0.8 and 5 m/s. The terms "transport velocity" and "fast fluidization conditions" are well known in the art; for a definition thereof, see, for example, "D. Geldart, Gas Fluidisation Technology, page 155 et seq. , J. Wiley & Sons Ltd. , 1986".

In the second polymerization zone (downcomer), the polymer particles flow under the action of gravity in a densified form, so that high values of density of the solid are reached (mass of polymer per volume of reactor), which approach the bulk density of the polymer. In other words, the polymer flows vertically down through the downcomer in a plug flow (packed flow mode), so that only small quantities of gas are entrained between the polymer particles.

Preferably, in the above described process, in step (b) a copolymerization of ethylene with one or more comonomers is carried out.

When polymerizing ethylene, and optionally comonomers, in gas-phase the amount of hydrogen used, and therefore the pressure ratio H₂/C₂⁻ depends on the type of polyethylene to be produced and in particular from its desired molecular weight expressed in terms Melt Flow Rate determined according to ASTM-D 1238 condition E. For relatively lower molecular weight (high values of MFR) a higher amount of hydrogen is needed and therefore also the pressure ratio H₂/C₂⁻ will be higher. Generally however, it ranges from 0.5 to 5, preferably from 1 to 4 and more preferably from 1.5 to 3.5.

As already mentioned, the catalysts of the present disclosure can be used for preparing linear low density polyethylenes (LLDPE, having a density lower than 0.940 g/cm3) and very-low-density and ultra-low-density polyethylenes (VLDPE and ULDPE, having a density lower than 0.920 g/cm3, to 0.880 g/cm3) consisting of copolymers of ethylene with one or more alpha-olefins having from 3 to 12 carbon atoms, having a mole content of units derived from ethylene of higher than 80%. The said catalysts can also be used to prepare a broader range of polyolefin products including, for example, high density ethylene polymers (HDPE, having a density higher than 0.940 g/cm3), comprising ethylene homopolymers and copolymers of ethylene with alpha-olefins having 3-12 carbon atoms; elastomeric copolymers of ethylene and propylene and elastomeric terpolymers of ethylene and propylene with smaller proportions of a diene having a content by weight of units derived from ethylene of between about 30 and 70%. The following examples are given in order to further describe the present disclosure.

The following examples are given in order to further describe the present disclosure.

| | |
|---|---|
| MIE flow index: | ASTM-D 1238 condition E |
| MIF flow index: | ASTM-D 1238 condition F |
| MIP flow index: | ASTM D 1238 condition P |
| Bulk density: | DIN-53194 |

Determination of Mg, Ti (tot) and Al: has been carried out via inductively coupled plasma emission spectroscopy (ICP) on a "I.C.P SPECTROMETER ARL Accuris".

The sample was prepared by analytically weighting, in a "fluxy" platinum crucible", 0.1÷03 g of catalyst and 3 gr of lithium metaborate/tetraborate 1/1 mixture. The crucible is placed on a weak Bunsen flame for the burning step and then after addition of some drops of KI solution inserted in a special apparatus "Claisse Fluxy" for the complete burning. The residue is collected with a 5% v/v HNO₃ solution and then analyzed via ICP at the following wavelength: Magnesium, 279.08 nm; Titanium, 368.52 nm; Aluminum, 394.40 nm.
Determination of Cl: has been carried out via potentiometric titration.
Recovered polymer was dried at 70°C under a nitrogen flow and analyzed. The obtained results are reported in table 2.

### EXAMPLES

### General procedure for the HDPE polymerization test

A 4.5-liter stainless-steel autoclave equipped with a magnetic stirrer, temperature and pressure indicator, and a feeding line for hexane, ethylene, and hydrogen, was used and purified by fluxing pure nitrogen at 70 °C for 60 minutes. Then, a solution of 1550 cm³ of hexane containing 0.25 g of triethyl aluminum (TEA) was introduced at a temperature of 30°C under nitrogen flow. In a separate 100 cm³ round bottom glass flask were subsequently introduced 50 cm³ of anhydrous hexane, 0.25 g of triethyl aluminum (TEA) and 0.015-0.030 grams of the solid catalyst component. The components were mixed together, aged 10 minutes at room temperature and introduced under nitrogen flow into the reactor. The autoclave was closed, the temperature was raised to 75°C, and hydrogen (4 bars partial pressure) and ethylene (7.0 bars partial pressure) were added. Under continuous stirring, the total pressure was maintained at 75°C for 120 minutes by feeding ethylene. At the end of the polymerization, the reactor was depressurized and the temperature was reduced to 30°C. The recovered polymer was dried at 40°C under vacuum and analyzed.

### PREPARATION OF THE SPHERICAL SUPPORT (ADDUCT MgCl₂/EtOH)

A magnesium chloride and alcohol adduct containing about 3 mols of alcohol was prepared following the method described in example 2 of USP 4,399,054, but working at 2000 RPM instead of 10000 RPM.

The so obtained adduct was dealcoholated up to an amount of alcohol of 25% wt via a thermal treatment, under nitrogen stream, over a temperature range of 50-150°C.

### Example 1

Into a 2 L four-necked round flask, purged with nitrogen, 1 L of TiCl₄ was introduced at 0°C. Then, at the same temperature, 70 g of a spherical MgCl₂/EtOH adduct containing 25% wt of ethanol and prepared as described above were added under stirring. The temperature was raised to 130°C in 3 hours and maintained for 60 minutes. Then, the stirring was discontinued, the solid product was allowed to settle and the supernatant liquid was siphoned off. Fresh TiCl₄ was added up to 1 L total volume and the treatment at 130°C for 60 minutes was repeated. After settling and siphoning, the solid residue was then washed five times with hexane at 50 °C and two times with hexane at 25 °C and dried under vacuum at 30 °C.

### Preparation of the final solid catalyst component (contact of the intermediate solid with EAA and CE)

In a 2 L four-necked round flask equipped with a mechanical stirrer and purged with nitrogen, 1000 mL of anhydrous heptane and 100 g of the solid intermediate component obtained as disclosed above were charged at room temperature. The temperature was raised up to 50°C and, under stirring, an amount of ethyl acetate and tetrahydrofuran corresponding to a molar ratio Mg/Acetate of 4 and a Mg/THF molar ratio of 4 was added dropwise within one hour. The temperature was maintained at 50°C and the mixture was stirred for 90 minutes. Then, the stirring was discontinued, the solid product was allowed to settle and the supernatant liquid was siphoned off. The solid was washed under stirring one time adding anhydrous heptane at 50°C up to 1 L of volume and then the stirring was discontinued, the solid product was allowed to settle and the supernatant liquid was siphoned off. Then the volume was restored to 1 L with anhydrous heptane and the temperature was raised up to 85°C and maintained under stirring for 2 hours. Then, the stirring was discontinued, the solid product was allowed to settle and the supernatant liquid was siphoned off.

The solid was washed 3 times with anhydrous hexane (3 x 1000 mL) at 25°C, recovered, dried under vacuum and analyzed. The result of the analysis and of the polymerization runs are reported in table 1.

### Example 2

The procedure of Example 1 was repeated with the difference that the amount of ethyl acetate and tetrahydrofuran added dropwise within one hour in the solution were such that the resulting molar ratio was Mg/Acetate 2.5 and Mg/THF 10. The results of the analysis and of the polymerization runs are reported in table 1.

### Example 3

The procedure of Example 1 was repeated with the difference that the amount of ethyl acetate and tetrahydrofuran added dropwise within one hour in the solution were such that the resulting molar ratio was Mg/Acetate 6 and Mg/THF 3. The results of the analysis and of the polymerization runs are reported in table 1.

### Example 4

The procedure of Example 1 was repeated with the difference that the amount of ethyl acetate and tetrahydrofuran added dropwise within one hour in the solution were such that the resulting molar ratio was Mg/Acetate 10 and Mg/THF 2.5. The results of the analysis and of the polymerization runs are reported in table 1.

### Example 5

The procedure of Example 1 was repeated with the difference that the amount of ethyl acetate and tetrahydrofuran added dropwise within one hour in the solution were such that the resulting molar ratio was Mg/Acetate 2.1 and Mg/THF 40. The results of the analysis and of the polymerization runs are reported in table 1.

### Comparative Example 1

The procedure of Example 1 was repeated with the difference that the amount of ethyl acetate and tetrahydrofuran added dropwise within one hour in the solution were such that the resulting molar ratio was Mg/Acetate 42 and Mg/THF 1.5. The results of the analysis and of the polymerization runs are reported in table 1.

### Comparison example 2

The procedure of Example 1 was repeated with the difference that the amount of ethyl acetate added dropwise within one hour in the solution was such that a Mg/Acetate molar ratio of 2 was generated. The results of the analysis and of the polymerization runs are reported in Table 1.

### Comparison example 3

The procedure of Example 1 was repeated with the difference that the amount of tetrahydrofuran added dropwise within one hour in the solution was such that a Mg/THF molar ratio of 2 was generated. The results of the analysis and of the polymerization runs are reported in Table 1.

### Comparison example 4

The procedure of Example 1 was repeated with the difference that the amount of ethyl acetate and ethyl benzoate added dropwise within one hour in the solution were such that the resulting molar ratio was Mg/Acetate 2.1 and Mg/EB 40. The results of the analysis and of the polymerization runs are reported in table 1.

### Example 6

### Procedure for the preparation of the solid catalyst component (A)

Into a 2 L four-necked round flask, purged with nitrogen, 1 L of TiCl₄ was introduced at 0°C. Then, at the same temperature, 70 g of a spherical MgCl₂/EtOH adduct containing 25% wt of ethanol and prepared as described above were added under stirring. The temperature was raised to 130 °C in 3 hours and maintained for 60 minutes. Then, the stirring was discontinued, the solid product was allowed to settle and the supernatant liquid was siphoned off. Fresh TiCl₄ was added up to 1 L total volume and the treatment at 130°C for 60 minutes was repeated. After settling and siphoning, the solid residue was then washed five times with hexane at 50°C and two times with hexane at 25 °C and dried under vacuum at 30 °C.

Into a 2 L four-necked glass reactor provided with stirrer, 812 cc of hexane at 10°C and whilst stirring 50 g of the catalyst component prepared as described above were introduced at 10°C. Keeping constant the internal temperature, 15 g of tri-n-octylaluminum (TNOA) in hexane (about 80 g/l) and an amount of cyclohexylmethyl-dimethoxysilane (CMMS) such as to have molar ratio TNOA/CMMS of 50, were slowly introduced into the reactor and the temperature was maintained to 10°C. After 10 minutes stirring, a total amount of 65 g of propylene were introduced into the reactor at the same temperature in 6.5 hours at constant rate. Then, the whole content was filtered and washed three times with hexane at a temperature of 30 °C (100 g/l). After drying the resulting pre-polymerized catalyst (A) was analyzed and found to contain 55% wt of polypropylene, 2.0% wt Ti, 9.85% wt Mg and 0.31% wt Al.

About 100 g of the solid prepolymerized catalyst prepared as described above were charged in a glass reactor purged with nitrogen and slurried with 1.0 L of heptane at 50°C.

Then, ethylacetate and tetrahydrofuran were carefully added dropwise (in 60') in such an amount to have a molar ratio of 4 between Mg/EAA and 4 between Mg and CE.

The slurry was kept under stirring for 1.5 h still having 50°C as internal temperature. Then, the stirring was discontinued, the solid product was allowed to settle and the supernatant liquid was siphoned off. The solid was washed under stirring one time adding anhydrous heptane at 50°C up to 1 L of volume and then the stirring was discontinued, the solid product was allowed to settle and the supernatant liquid was siphoned off. Then the volume was restored to 1 L with anhydrous heptane and the temperature was raised up to 85 °C and maintained under stirring for 2 hours. Then, the stirring was discontinued, the solid product was allowed to settle and the supernatant liquid was siphoned off.

The solid was washed 3 times with anhydrous hexane (3 x 1000 mL) at 25°C, recovered, dried under vacuum and analyzed and the resulting EAA/CE molar ratio was found 0.93.

### Polymerization

The polymerization process was carried out in a plant working continuously and equipped with a stirred vessel (pre-contacting pot) in which the catalyst components were mixed to form the catalytic system, and one fluidized bed reactor (*polymerization reactor*) kept under fluidization conditions with propane receiving the catalyst mixture coming from the stirred vessel.

The following reactants are fed to the pre-contacting pot and maintained at a temperature of 50°C:
- the solid catalyst component prepared as described above (25 g/h)
- liquid propane as diluent
- a solution of TIBA/DEAC (125 g/h)

The so obtained catalytic system was fed, via liquid propane from the pre-contacting section to the gas-phase fluidized bed reactor together with monomer feed. The reactor was operated under the conditions reported in Table 2. The polymer discharged from the final reactor was first transferred to the steaming section and then dried at 70°C under a nitrogen flow and weighted. The polymer properties are reported in Table 2.

### Comparison Example 5

The polymerization was carried out as described in example 7 with the only difference that the catalyst component used was prepared without using tetrahydrofuran.

**Table 1**

| **Example** | | | | | | | | |
|---|---|---|---|---|---|---|---|---|
| | **Mg** | **Ti** | **EAA** | **CE** | **EAA/CE** | **Yield** | **MIE** | **BD** |
| | **wt.%** | **wt.%** | **wt.%** | **wt.%** | **m.r.** | **Kg/g** | **g/10'** | **g/cc** |
| **1** | 16.8 | 2.6 | 12.3 | 6.7 | 1.5 | 11.1 | 0.92 | 0.390 |
| **2** | 16.3 | 2.5 | 18.2 | 2.1 | 7.1 | 13.1 | 1.48 | 0.361 |
| **3** | 16.4 | 2.6 | 6.7 | 9.5 | 0.6 | 4.3 | 2.02 | 0.400 |
| **4** | 16.5 | 2.7 | 4.4 | 12.7 | 0.3 | 4.2 | 2.3 | 0.382 |
| **5** | 16.0 | 2.4 | 19.3 | 1.0 | 15.6 | 8.4 | 1.00 | 0.376 |
| **C1** | 16.2 | 2.5 | 1.6 | 22.0 | 0.06 | 7.1 | 0.95 | 0.350 |
| **C2** | 16.1 | 2.5 | 23.9 | --- | --- | 13.9 | 0.90 | 0.339 |
| **C3** | 17.0 | 2.8 | --- | 20.6 | --- | 7.6 | 0.96 | 0.355 |
| **C4** | 16.2 | 2.5 | 22.7 | 1.8 | 21.4 | 11.2 | 1.4 | 0.350 |

**Table 2**

| **EXAMPLE** | | **6** | **C5** |
|---|---|---|---|
| **T** | **°C** | 80 | 80 |
| **P** | **bar** | 26 | 26 |
| **C₂⁻** | **%** | 9.3 | 8.6 |
| **H₂/C₂⁻** | **-** | 2.4 | 3.0 |
| **Spec. Mileage** | **g/g/bar.h** | 700 | 659 |
| **MIE** | **g/10'** | 78 | 75 |
| **PBD** | **g/cc** | 0.450 | 0.412 |
| **% fines** | **<180µm** | 0.9 | 1.7 |

## Claims

1. Catalyst components for the polymerization of olefins CH2=CHR, wherein R is hydrogen or hydrocarbon radical having 1-12 carbon atoms comprising Ti, Mg, chlorine and an internal donor selected from C₁-C₁₀ alkyl esters of C₂-C₁₀ aliphatic monocarboxylic acids (EAA) and another internal donor selected from cyclic ethers (CE) such as the EAA/CE molar ratio ranges from 0.2 to less than 20.

2. The catalyst component according to claim 1 in which the EAA/CE molar ratio ranges from 0.2 to 16.

3. The catalyst components according to claim 1 in which the esters (EAA) are the C₂-C₅ alkyl esters of C₂-C₆ aliphatic monocarboxylic acids.

4. The catalyst component according to claim 1 in which the (CE) internal donor is selected from cyclic ethers having 3-5 carbon atoms.

5. The catalyst component of claim 1 in which the (EAA+CE)/Ti molar ratio is higher than 1.5.

6. The catalyst component of claim 1 in which the content of (EAA) ranges from 1 to 30%wt with respect to the total weight of the solid catalyst component.

7. The catalyst component of claim 1 in which the content of (CE) ranges from 1 to 20%wt with respect to the total weight of the solid catalyst component.

8. The catalyst component of claim 1 in which the Mg/Ti molar ratio ranges from 5 to 50.

9. The catalyst component according to any one of the preceding claims, containing an olefin polymer in an amount ranging from 10 to 85% of the total weight of the solid catalyst component.

10. Catalysts for the polymerization of olefins comprising the product of the reaction between:
(a) a solid catalyst component according to one or more of the preceding claims; and
(b) one or more Al-alkyl compounds.

11. Catalysts according to claim 10 in which the Al-alkyl compounds are selected from the group consisting of Al-trialkyl compounds, alkyl-aluminum halides and mixtures thereof.

12. The catalysts according to claim 11 further comprising an external electron donor compound (ED) and/or a halogenated compound (D) as activity enhancer.

13. Process for the (co)polymerization of olefins CH₂=CHR, wherein R is hydrogen or hydrocarbon radical having 1-12 carbon atoms, carried out in the presence of the catalyst according to any of claims 10-12.

14. Process according to claim 13 carried out in gas-phase.

## Patentansprüche

1. Katalysatorkomponenten zur Polymerisation von Olefinen CH₂=CHR, worin R Wasserstoff oder ein Kohlenwasserstoffrest mit 1 bis 12 Kohlenstoffatomen ist, umfassend Ti, Mg, Chlor und einen internen Donor ausgewählt aus C₁- bis C₁₀-Alkylestern von aliphatischen C₂- bis C₁₀-Monocarbonsäuren (EAA) und einen anderen internen Donor ausgewählt aus cyclischen Ethern (CE), so dass das molare Verhältnis von EAA/CE im Bereich von 0,2 bis kleiner als 20 liegt.

2. Katalysatorkomponente nach Anspruch 1, wobei das molare Verhältnis von EAA/CE im Bereich von 0,2 bis 16 liegt.

3. Katalysatorkomponenten nach Anspruch 1, wobei die Ester (EAA) die C₂- bis Cs-Alkylester von aliphatischen C₂- bis C₆-Monocarbonsäuren sind.

4. Katalysatorkomponente nach Anspruch 1, wobei der interne Donor (CE) ausgewählt ist aus cyclischen Ethern mit 3 bis 5 Kohlenstoffatomen.

5. Katalysatorkomponente nach Anspruch 1, wobei das molare Verhältnis von (EAA+CE)/Ti größer als 1,5 ist.

6. Katalysatorkomponente nach Anspruch 1, wobei der Gehalt an (EAA) im Bereich von 1 bis 30 Gew.% liegt, bezogen auf das Gesamtgewicht der festen Katalysatorkomponente.

7. Katalysatorkomponente nach Anspruch 1, wobei der Gehalt an (CE) im Bereich von 1 bis 20 Gew.% liegt, bezogen auf das Gesamtgewicht der festen Katalysatorkomponente.

8. Katalysatorkomponente nach Anspruch 1, wobei das molare Verhältnis von Mg/Ti im Bereich von 5 bis 50 liegt.

9. Katalysatorkomponente nach einem der vorhergehenden Ansprüche, die ein Olefinpolymer in einer Menge im Bereich von 10 bis 85 Gew.% des Gesamtgewichts der festen Katalysatorkomponente enthält.

10. Katalysatoren zur Polymerisation von Olefinen, umfassend das Produkt der Reaktion zwischen:
(a) einer festen Katalysatorkomponente nach einem oder mehreren der vorhergehenden Ansprüche; und
(b) einer oder mehreren Al-Alkylverbindungen.

11. Katalysatoren nach Anspruch 10, wobei die Al-Alkylverbindungen ausgewählt sind aus der Gruppe bestehend aus Al-Trialkylverbindungen, Alkylaluminiumhalogeniden und Mischungen davon.

12. Katalysatoren nach Anspruch 11, des Weiteren umfassend eine externe Elektronendonorverbindung (ED) und/oder eine halogenierte Verbindung (D) als Aktivitätssteigerungsmittel.

13. Verfahren zur (Co)polymerisation von Olefinen CH₂=CHR, worin R Wasserstoff oder ein Kohlenwasserstoffrest mit 1 bis 12 Kohlenstoffatomen ist, das in Gegenwart des Katalysators nach einem der Ansprüche 10 bis 12 durchgeführt wird.

14. Verfahren nach Anspruch 13, das in der Gasphase durchgeführt wird.

## Revendications

1. Constituants catalytiques pour la polymérisation d'oléfines CH₂=CHR, dans lesquelles R représente hydrogène ou un radical hydrocarboné comprenant 1 à 12 atomes de carbone, comprenant Ti, Mg, chlore et un donneur interne choisi parmi des esters C₁-C₁₀-alkyliques d'acides monocarboxyliques aliphatiques en C₂-C₁₀ (EAA) et un autre donneur interne choisi parmi des éthers cycliques (CE) de telle sorte que le rapport molaire EAA/CE est situé dans la plage de 0,2 à moins de 20.

2. Constituant catalytique selon la revendication 1, dans lequel le rapport molaire EAA/CE est situé dans la plage de 0,2 à 16.

3. Constituants catalytiques selon la revendication 1, dans lesquels les esters (EAA) sont les esters C₂-C₅-alkyliques d'acides monocarboxyliques aliphatiques en C₂-C₆.

4. Constituant catalytique selon la revendication 1, dans lequel le donneur interne (CE) est choisi parmi des éthers cycliques comprenant 3 à 5 atomes de carbone.

5. Constituant catalytique selon la revendication 1, dans lequel le rapport molaire (EAA+CE)/Ti est supérieur à 1,5.

6. Constituant catalytique selon la revendication 1, dans lequel la teneur en (EAA) est située dans la plage de 1 à 30 % en poids par rapport au poids total du constituant catalytique solide.

7. Constituant catalytique selon la revendication 1, dans lequel la teneur en (CE) est située dans la plage de 1 à 20 % en poids par rapport au poids total du constituant catalytique solide.

8. Constituant catalytique selon la revendication 1, dans lequel le rapport molaire Mg/Ti est situé dans la plage de 5 à 50.

9. Constituant catalytique selon l'une quelconque des revendications précédentes, contenant un polymère oléfinique en une quantité située dans la plage de 10 à 85 % du poids total du constituant catalytique solide.

10. Catalyseurs pour la polymérisation d'oléfines comprenant le produit de la réaction entre :
(a) un constituant catalytique solide selon l'une ou plusieurs des revendications précédentes ; et
(b) un ou plusieurs composés d'alkyl-Al.

11. Catalyseurs selon la revendication 10, dans lesquels les composés d'alkyl-Al sont choisis dans le groupe constitué par les composés de trialkyl-Al, les halogénures d'alkyl-aluminium et leurs mélanges.

12. Catalyseurs selon la revendication 11, comprenant en outre un composé donneur d'électrons externe (ED) et/ou un composé halogéné (D) en tant qu'activateur d'activité.

13. Procédé pour la (co)polymérisation d'oléfines CH₂=CHR, dans lesquelles R représente hydrogène ou un radical hydrocarboné comprenant 1 à 12 atomes de carbone, mis en oeuvre en présence du catalyseur selon l'une quelconque des revendications 10 à 12.

14. Procédé selon la revendication 13, mis en oeuvre en phase gazeuse.
